Europäisches Patentamt

European Patent Office

Office européen des brevets

(11) Veröffentlichungsnummer: **0 415 194 A2**

## (12) EUROPÄISCHE PATENTANMELDUNG

(21) Anmeldenummer: **90115709.9**

(22) Anmeldetag: **16.08.90**

(51) Int. Cl.5: **B60Q 1/50, B60Q 7/00**

(30) Priorität: **29.08.89 CH 3128/89**

(43) Veröffentlichungstag der Anmeldung:
**06.03.91 Patentblatt 91/10**

(84) Benannte Vertragsstaaten:
**AT BE CH DE DK ES FR GB GR IT LI LU NL SE**

(71) Anmelder: **Muggli, David**
**Hiltenbergstrasse 1**
**CH-8360 Eschlikon(CH)**

(72) Erfinder: **Muggli, David**
**Hiltenbergstrasse 1**
**CH-8360 Eschlikon(CH)**

(74) Vertreter: **Klunker . Schmitt-Nilson . Hirsch**
**Winzererstrasse 106**
**W-8000 München 40(DE)**

(54) **Anzeigeschild für Kraftfahrzeuge.**

(57) Ein Anzeigeschild zum Anbringen am Dach eines Kraftfahrzeuges, bestehend in einem geschlossenen Kasten mit Anzeigesymbolen und/oder Hinweisbeschriftungen wie "Taxi", "Polizei" oder dergleichen.

Zur Verringerung seines Luftwiderstandes und zugleich zur Gewährleistung einer allseitigen Wahrnehmbarkeit der daran angebrachten Informationen (4) ist der Kasten (1) in Form einer Pyramide ausgebildet.

Fig.2

# ANZEIGESCHILD FÜR KRAFTFAHRZEUGE

Die Erfindung betrifft ein Anzeigeschild zum Anbringen am Dach eines Kraftfahrzeuges, bestehend in einem geschlossenen Kasten mit Anzeigesymbolen und/oder Hinweisbeschriftungen wie "Taxi", "Polizei" oder dergleichen.

Bei einem bekannten Leuchtschildkasten für die Anbringung am Fahrzeugdach, mit einem darin integrierbaren, Anzeigesymbole oder Hinweisbeschriftungen aufweisenden, balkenartigen Leuchtschild, weist das letztere eine dachähnlich gewölbte Form mit zwei parallelen geradlinigen Unterkanten und zwei ebenfalls parallelen jedoch gekrümmten Seitenkanten auf. Es kann dabei einen konstanten, der Form der Seitenkanten entsprechenden, vorzugsweise parabelförmigen Querschnitt aufweisen. Der Leuchtschildkasten selbst ist nach Art eines Dachträgers in den beiden in Fahrzeuglängsrichtung verlaufenden Dachrinnen festspannbar. Der Aufbau des Leuchtschildkastens und die Befestigung desselben am Fahrzeugdach sind derart getroffen, daß ein Eindringen von Wasser zwischen Dach und Träger sowie zwischen Träger und Leuchtschild verhindert werden kann. Es soll hierdurch sowie auch durch die mit einer Wölbung ausgeformte Oberfläche von Leuchtschild und Kasten im Falle einer in einer automatischen Waschanlage getätigten Fahrzeugreinigung ein Überfahren von Bürstenwalzen über den Leuchtschildkasten ermöglicht werden.

Obwohl die hier vorgeschlagene Formgebung des Leuchtschildkastens strömungstechnisch merklich günstiger als ältere Leuchtschilder mit Quaderform erscheint, ist doch der Luftwiderstand des Leuchtschildkastens gemäß diesem Vorschlag, insbesondere bei Autobahngeschwindigkeiten, nicht vernachlässigbar. Ein werbetechnisch gewichtiger, weiterer Nachteil des Leuchtschildkastens geschilderter Art ist, daß die erforderlichen Informationen lediglich auf der Vorder- und der Rückseite desselben anbringbar und damit nur aus der Fahrtrichtung oder der Gegenrichtung ablesbar sind. Auch die Montage bzw. die Demontage des in Rede stehenden Leuchtschildkastens ist mit dem jeweils notwendigen Fest- bzw. Losschrauben von Greifklauen etwas umständlich.

Der Erfindung stellt sich die Aufgabe, ein Anzeigeschild für Fahrzeuge zu schaffen, das die Nachteile des Bekannten meidet. Es soll bei guter Werbewirksamkeit eine aerodynamisch günstige Formgebung aufweisen. Ferner ist auch eine erleichterte, möglichst schnelle Handhabung beim Anbringen des Anzeigeschildes am Fahrzeugdach bzw. beim Wiederentfernen desselben anzustreben.

Die Aufgabe wird erfindungsgemäß mit Hilfe des Ausbildungsmerkmals nach dem Kennzeichen des Patentanspruches 1 gelöst.

Infolge seiner keilähnlichen Form setzt der Erfindungsgegenstand dem Fahrtwind einen erheblichen kleineren Widerstand entgegen als ein balkenförmiger und im Luftstrom mit einer der Fahrzeugbreite entsprechenden Länge querliegenden Leuchtschildkasten. Die sich schräg aufwärts erstreckenden drei Seitenflächen des pyramidenförmigen Kastens ermöglichen eine allseitige Wahrnehmbarkeit der an ihnen angebrachten Informationen.

Merkmale einer besonders vorteilhaften Weiterausbildung der Erfindung sind Gegenstand der abhängigen Patentansprüche 2 bis 13.

Die Erfindung wird beispielsweise anhand von bevorzugten Ausführungsformen gemäß den Zeichnungen näher erläutert.

Es zeigen:

Figur 1 eine Seitenansicht einer Ausführungsform eines Anzeigeschildes für Kraftfahrzeuge gemäß der Erfindung in Betriebsstellung auf dem teilweise weggeschnittenen Dach eines Kraftfahrzeuges;

Figur 2 eine Draufsicht auf das Anzeigeschild nach Fig. 1;

Figur 3 eine Ansicht des Anzeigeschildes gemäß den Fig. 1 und 2 von unten;

Figur 4 eine Ansicht einer weiteren Ausführungsform eines Anzeigeschildes für Kraftfahrzeuge gemäß der Erfindung von unten;

Figur 5 eine Seitenansicht des Anzeigeschildes gemäß Fig. 4 in Betriebsstellung auf dem teilweise weggeschnittenen Dach eines Kraftfahrzeuges; und

Figur 6 eine Schnittansicht eines Teils des Anzeigeschildes gemäß den Figuren 4 und 5, längs der Schnittebene A-A.

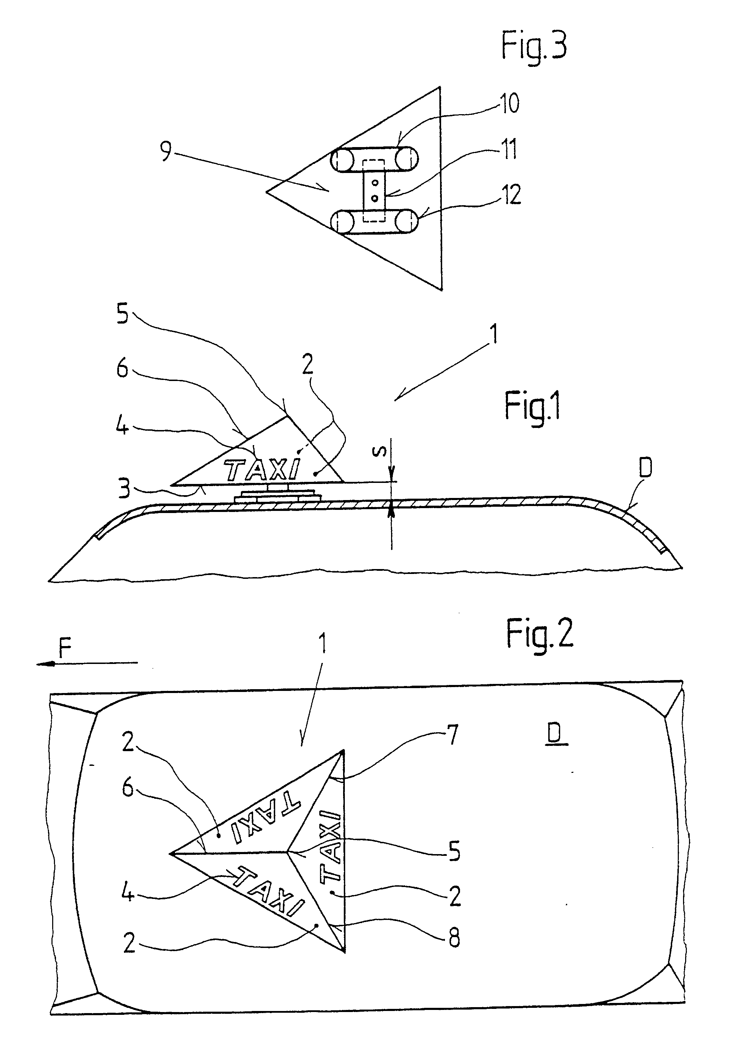

Das in den Fig. 1 bis 6 dargestellte Anzeigeschild zum Anbringen am Dach eines Kraftfahrzeuges besteht in einem geschlossenen Kasten, der mit Anzeigesymbolen und/oder Hinweisbeschriftungen wie beispielsweise "Taxi", "Polizei" oder dergleichen versehen sein kann. Erfindungsgemäß ist der Kasten 1 als eine Pyramide ausgestaltet. Diese relativ einfache, strömungsgünstige und daher kraftstoffsparende Form ergibt zugleich eine allseitige Wahrnehmbarkeit der daran angebrachten Informationen. An jeder der sich schräg nach oben erstreckenden Seitenflächen 2 des in Betriebsstellung mit seiner Grundfläche 3 dem Fahrzeugdach D zugewandten Kastens 1 ist je eine Hinweisbeschriftung 4 vorgesehen. Innerhalb der Konturen der letzteren sind die Seitenflächen 2 lichtdurchlässig beschaffen, und im Kasteninneren befindet sich mindestens eine Lichtquelle, so daß die Wahrnehmbarkeit besagten Hinweises auch bei Dunkelheit gewährleistet ist.

Der pyramidenförmige Kasten 1 weist besonders vorteilhaft eine unsymmetrische Formgebung mit einem, quer zur Fahrtrichtung F des Fahrzeugs betrachtet, betont keilartigen Profil auf. Dabei ist die in Betriebsstellung in die Fahrtrichtung F orientierte, schräg aufwärts zur Pyramidenspitze 5 verlaufende Kante 6 des Kastens 1 länger als dessen beide anderen, ebenfalls in der Pyramidenspitze 5 zusammenlaufende Kanten 7, 8 ausgelegt.

Die Grundfläche des pyramidenförmigen Kastens 1 muß nicht notwendigerweise als Dreieck ausgebildet sein. Eine strömungsgünstige Form des Kastens 1 sowie eine allseitige Wahrnehmbarkeit der daran angebrachten Informationen ist beispielsweise auch bei einer Pyramide mit viereckiger Grundfläche gewährleistet, insbesondere dann, wenn die in Fahrtrichtung weisenden Kanten länger sind als die beiden anderen Kanten.

Die Befestigung des Kastens 1 am Fahrzeugdach D kann besonders zweckmäßig magnetisch erfolgen, wobei zwischen der Grundfläche 3 des ersteren und der Oberfläche des letzteren ein Spalt s bestehen bleibt. Fig. 1 und Fig. 3 zeigen eine mögliche Ausführungsform der Befestigungsvorrichtung 9. Die Befestigungsvorrichtung 9 ist in Form eines Trägers 10 vorgesehen, der in Draufsicht Doppel-T-Form hat. Dieser weist vorteilhaft einen als Torsionsstab ausgebildeten Verbindungsbalken 11 auf, der seinerseits an der dem Fahrzeugdach D zugewandten Seite der Grundfläche 3 des Kastens 1 befestigt ist. Es empfiehlt sich, an jedem der vier Enden des Doppel-T-Trägers 10 je einen Permanentmagneten 12 vorzusehen.

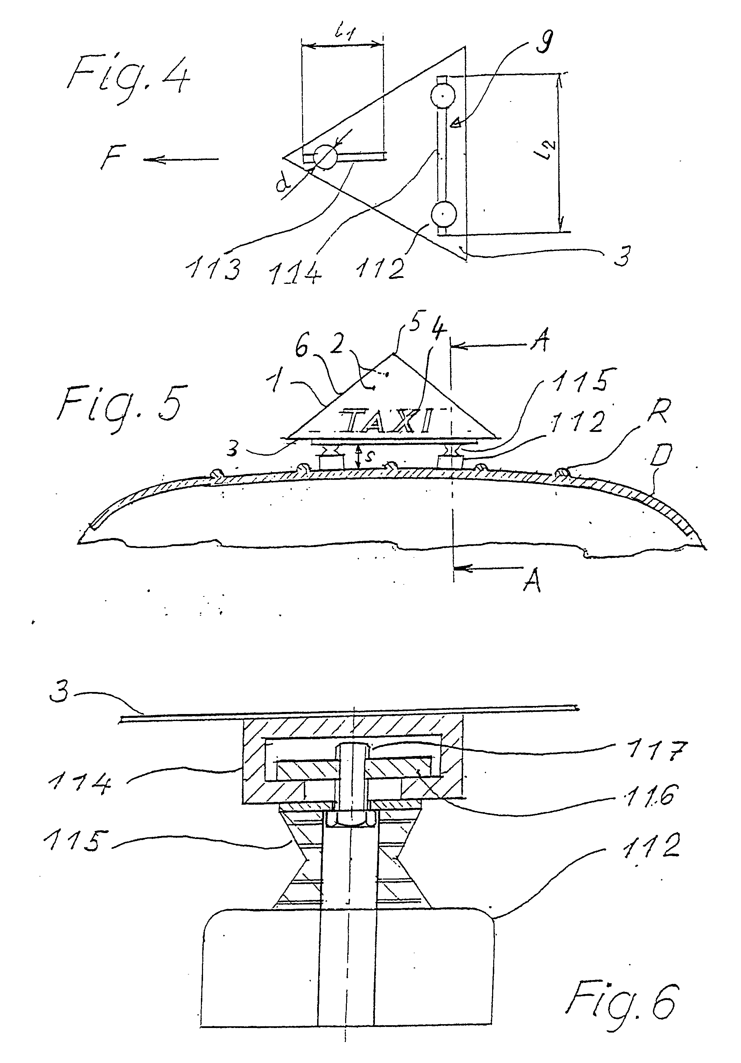

Eine weitere Ausführungsform der Befestigungsvorrichtung 9 ist in den Fig. 4 bis 6 angegeben.

Die Befestigung erfolgt hier mittels lediglich dreier Permanentmagnete 112, die auf zwei Schienen 113, 114 linear verschiebbar angeordnet sind. Die Schienen ihrerseits sind derart an der dem Fahrzeugdach D zugewandten Unterseite der dreieckförmigen, ebenen Grundfläche 3 des Kastens 1 befestigt, daß sich die eine, nämlich die kürzere Schiene 113 in Fahrtrichtung F des Fahrzeugs bis nahe der in dieselbe Richtung weisenden Ecke der Grundfläche 3 erstreckt. Die kürzere Schiene 113 nimmt einen Permanentmagneten 112 auf. Die andere, längere Schiene 114 verläuft rechtwinklig zur kürzeren Schiene 113 und zugleich parallel zur, in Fahrtrichtung F gesehen, hinteren Seitenkante der Grundfläche 3 zwischen den beiden seitwärts weisenden Ecken der letzteren und trägt zwei Permanentmagnete 112.

Diese Anordnung der Schienen 113, 114 ist vorteilhaft, jedoch sind auch andere Anordnungsmöglichkeiten denkbar.

Die Länge der Schienen 113, 114 ist so zu bemessen, daß die Befestigung des Anzeigeschildes dergestalt, daß die Grundfläche des pyramidenförmigen Kastens 1 jeweils eine im wesentlichen horizontale Lage einnimmt, auch an Fahrzeugen möglich ist, die ein sogenanntes Sonnendach oder ein mit Rippen R ausgestattetes Dach aufweisen.

Zur Befestigung des Kastens 1 auf einem Fahrzeugdach D besonders vorteilhaft sind Permanentmagnete 112 kreiszylindrischer Form.

Als Ausführungsbeispiel werden folgende Maße angegeben:

Länge der kürzeren Schiene 113: $L_1$ = 350 mm
Länge der längeren Schiene 114: $L_2$ = 650 mm
Durchmesser der Permanentmagnete 112: d = 100 mm
Verstellbereich für Magnet 112 auf Schiene 113: b = 250mm
Verstellbereich für Magnet 112 gesamthaft auf Schiene 114: b = 450 mm

Es ist natürlich auch möglich, nicht zwei Permanentmagnete 112 gemeinsam auf einer Schiene anzuordnen, sonder für jeden der Permanentmagnete eine eigene Schiene vorzusehen, die jeweils dergestalt an der dem Fahrzeugdach D zugewandten Unterseite der Grundfläche 3 des Kastens 1 befestigt ist, daß die Grund fläche 3 bei Anbringung des Kastens 1 auf einem Fahrzeugdach D durch geeignetes Verschieben der Permanentmagnete 112 auf den Schienen eine im wesentlichen horizontale Lage einnehmen kann.

Eine optimale Anbringung des Kastens 1 auf einem nicht durchgehend ebenen Fahrzeugdach D kann unter Umständen auch schon dann gewährleistet sein, wenn lediglich einer der Permanentmagnete 112 verschiebbar auf einer Schiene angeordnet ist und die übrigen Permanentmagnete ortsfest an der Grundfläche 3 des Kastens 1 befestigt sind.

Es empfiehlt sich ferner, die Permanentmagnete 112 räumlich zumindest beschränkt beweglich an der Grundfläche 3 des Kastens 1 zu befestigen. Dies kann je über einen elastischen Körper, beispielsweise ein im mittleren Bereich einen verringerten Durchmesser aufweisendes, zylindrisches (diaboloartiges) Element 115 aus Gummi geschehen. Die Verankerung eines jeden Permanentmagneten 112 erfolgt mittels einer die Zentralbohrung des Elements 115 durchsetzenden Schraube 117, wobei die zugeordnete Mutter 116 in der zugeordneten Schiene 113 oder 114 C-förmigen Profils aufgenommen ist. Das Element 115 ist an dem Permanentmagnet 112 anvulkanisiert. Die beschriebene Anordnung ist beispielhaft an der Befestigung eines der beiden, in Fahrtrichtung F betrachtet, hinteren Permanentmagnete 112 in der Fig. 6 veranschaulicht, die eine Seitenansicht besagter Anordnung im Schnitt längs der Schnittebene A-A gemäß der Fig. 5 darstellt.

Es wäre jedoch auch ein Anlenken der Permanentmagnete 112 mit Hilfe von Kugelgelenken denkbar.

In der hier geschilderten Art und Weise wird eine optimale Anpassung der Permanentmagnete 112 an ein beliebiges Fahrzeugdach und damit auch die Entfaltung der maximalen Haltekraft durch dieselben erreichbar.

Die Länge der sich von der Grundfläche 3 des Kastens 1 in Richtung der Pyramidenspitze 5 erstreckenden Kanten 6, 7 und 8 kann auch so bemessen sein, daß diese keinen gemeinsamen Schnittpunkt besitzen, sondern daß ihre nicht die Eckpunkte der Grundfläche 3 bildenden Endpunkte die Eckpunkte einer dazu im wesentlichen parallelen Fläche bilden. Der Kasten 1 besitzt hier also die Form einer "abgeschnittenen" Pyramide.

Als Weiterbildung dieser Ausführungsform können auch zueinander parallele Kanten 6, 7 und 8 vorgesehen werden.

Dabei resultiert ein prismenähnlicher Körper, dessen parallele drei Längskanten vorteilhaft kürzer als die Seitenkanten seiner beiden dreieckförmigen Flächen bemessen sind und der mit einer seiner dreieckförmigen Flächen dem Fahrzeugdach D zugewandt sowie mit einer seiner Längskanten in die Fahrtrichtung F orientiert sein sollte. Eine weitere Möglichkeit ist ein prismenähnlicher Körper mit rautenförmigem Horizontalschnitt.

## Ansprüche

1. Anzeigeschild zum Anbringen am Dach eines Kraftfahrzeugs, bestehend in einem geschlossenen Kasten mit Anzeigesymbolen und/oder Hinweisbeschriftungen wie "Taxi", "Polizei" oder dergleichen, dadurch gekennzeichnet, daß der Kasten (1) in der Gestalt einer Pyramide ausgebildet ist.

2. Anzeigeschild nach Anspruch 1, dadurch gekennzeichnet, daß an jeder der schräg nach oben verlaufenden drei Seitenflächen (2) des in Betriebsstellung mit seiner Grundfläche (3) dem Fahrzeugdach (D) zugewandten, pyramidenförmigen Kastens (1) je ein Anzeigesymbol und/oder eine Hinweisbeschriftung (4) vorgesehen ist.

3. Anzeigeschild nach Anspruch 1 oder 2, dadurch gekennzeichnet, daß die sich schräg nach oben erstreckenden Seitenflächen (2) innerhalb der Umrisse der an ihnen angebrachten Symbolen und/oder Hinweisbeschriftungen (4) lichtdurchlässig beschaffen sind und daß im Inneren des Kastens (1) mindestens eine Lichtquelle angeordnet ist.

4. Anzeigeschild nach einem der Ansprüche 1 bis 3, gekennzeichnet durch unsymmetrische Ausgestaltung des pyramidenförmigen Kastens (1) mit, quer zur Fahrtrichtung (F) des Fahrzeuges betrachtet, betont keilartigem Profil, indem dessen in Betriebsstellung in die Fahrtrichtung (F) orientierte, schräg aufwärts zur Pyramidenspitze (5) verlaufende Kante (6) länger als die beiden anderen, ebenfalls in der Pyramidenspitze (5) zusammenlaufenden Kanten (7, 8) desselben ausgelegt ist.

5. Anzeigeschild nach einem der Ansprüche 1 bis 4, gekennzeichnet durch magnetische Befestigung des Kastens (1) am Fahrzeugdach (D), wobei zwischen der Grundfläche (3) des ersteren und der Oberfläche des letzteren ein Spalt (s) bestehen bleibt.

6. Anzeigeschild nach Anspruch 5, gekennzeichnet durch vier Permanentmagnete (12), die jeweils an einem der vier Enden eines Doppel-T-Trägers (10) angeordnet sind, der an der dem Fahrzeugdach (D) zugewandten Seite der Grundfläche (3) des Kastens (1) vorgesehen ist.

7. Anzeigeschild nach Anspruch 6, dadurch gekennzeichnet, daß der Verbindungsbalken (11) des Doppel-T-Trägers (10) als Torsionsstab ausgebildet ist.

8. Anzeigeschild nach Anspruch 5, gekennzeichnet durch drei Permanentmagnete (112), von denen mindestens einer an einer Schiene (113; 114) linear verschiebbar angeordnet ist, wobei die mindestens eine Schiene (113, 114) an der dem Fahrzeugdach (D) zugewandten Seite der Grundfläche (3) des Kastens (1) vorgesehen ist.

9. Anzeigeschild nach Anspruch 8, dadurch gekennzeichnet, daß einer der Permanentmagnete (112) an einer kürzeren Schiene (113) und die anderen beiden Permanentmagnete (112) an einer gemeinsamen längeren Schiene (114) angeordnet sind, wobei die kürzere Schiene (113) im wesentlichen parallel zur Fahrtrichtung (F) des Fahrzeugs angeordnet ist und sich von einem Punkt nahe der in Fahrtrichtung (F) orientierten Ecke der Grundfläche (3) in Richtung der dieser Ecke gegenüberliegenden Seitenkante der Grundfläche (3) erstreckt, und wobei die längere Schiene (114) im wesentlichen rechtwinklig zu der Schiene (113) und parallel zu der von der Fahrtrichtung (F) abgewandten Seitenkante der Grundfläche (3) angeordnet ist.

10. Anzeigeschild nach einem der Ansprüche 5 bis 9, dadurch gekennzeichnet, daß die Permanentmagnete (112) räumlich beweglich an dem Kasten (1) befestigt sind.

11. Anzeigeschild nach Anspruch 10,
dadurch gekennzeichnet,
daß zur räumlich beweglichen Befestigung elastische Körper vorgesehen sind.

12. Anzeigeschild nach Anspruch 11,
dadurch gekennzeichnet,
daß die Permanentmagnete (112) jeweils mittels eines die Zentralbohrung eines im mittleren Bereich einen verringerten Durchmesser aufweisenden, zylindrischen Elements (115) durchsetzenden Schraube (116) befestigt sind, wobei jeweils die zugehörige Mutter (116) in der zugeordneten Schiene (113; 114) C-förmigen Profils aufgenommen ist.

13. Anzeigeschild nach Anspruch 10,
dadurch gekennzeichnet,
daß die Permanentmagnete (112) mit Kugelgelenken an der Grundfläche (3) des Kastens (1) befestigt sind.

Fig.3

Fig.1

Fig.2

Fig. 4

Fig. 5

Fig. 6